# EUROPÄISCHE PATENTSCHRIFT

(11) **EP 2 359 058 B1**
(45) Veröffentlichungstag und Bekanntmachung des Hinweises auf die Patenterteilung: **30.11.2016**
(21) Anmeldenummer: 09747815.0
(22) Anmeldetag: 29.10.2009
(51) Int. Cl.: F22B 35/00, F01K 13/02, F01K 23/10

(54) **VERFAHREN ZUM BETREIBEN EINES ABHITZEDAMPFERZEUGERS**
METHOD OF OPERATING A WASTE HEAT STEAM GENERATOR
PROCÉDÉ DESTINÉ AU FONCTIONNEMENT D'UN GÉNÉRATEUR DE VAPEUR À RÉCUPÉRATION DE CHALEUR

(30) Priorität: 13.11.2008 EP 08019862
(43) Veröffentlichungstag der Anmeldung: 24.08.2011
(73) Patentinhaber: Siemens Aktiengesellschaft, 80333 München (DE)
(72) Erfinder: THOMAS, Frank, 91056 Erlangen (DE); BRÜCKNER, Jan, 91080 Uttenreuth (DE)
(86) Internationale Anmeldenummer: PCT/EP2009/064263
(87) Internationale Veröffentlichungsnummer: WO 2010/054934

(56) Entgegenhaltungen:
- EP-A1- 1 241 323
- EP-A1- 1 429 074
- EP-A1- 2 034 137
- EP-A2- 1 059 488
- US-A- 3 818 872
- US-A- 5 555 849
- DOLEZAL R: "DIE SPEISEWASSER- BZW. SATTDAMPFUNLEITUNG ALS MITTEL ZUR KORREKTUR DER HEIZFLACHEN LEISTUNG BEI GUD-ABHITZEKESSELN MIT TROMMEL" VGB KRAFTWERKSTECHNIK, VGB KRAFTWERKSTECHNIK GMBH. ESSEN, DE, Bd. 75, Nr. 8, 1. August 1995 (1995-08-01) , Seiten 685-688, XP000522569 ISSN: 0372-5715

## Beschreibung

Die Erfindung betrifft ein Verfahren zum Betreiben eines Abhitzedampferzeugers mit einem Verdampfer, einem Economizer mit einer Anzahl von Economizerheizflächen und mit einer zu einer Anzahl von Economizerheizflächen strömungsmediumsseitig parallel geschalteten Bypassleitung.

Ein Abhitzedampferzeuger ist ein Wärmetauscher, der Wärme aus einem heißen Gasstrom zurückgewinnt. Abhitzedampferzeuger werden beispielsweise in Gas- und Dampfturbinenkraftwerken eingesetzt, in denen die heißen Abgase einer oder mehrerer Gasturbinen in einen Abhitzedampferzeuger geleitet werden. Der darin erzeugte Dampf wird anschließend zum Antrieb einer Dampfturbine genutzt. Diese Kombination produziert elektrische Energie wesentlich effizienter als Gas- bzw. Dampfturbine allein.

Abhitzedampferzeuger sind anhand einer Vielzahl von Kriterien kategorisierbar: Basierend auf der Strömungsrichtung des Gasstroms können Abhitzedampferzeuger beispielsweise in vertikale und horizontale Bauarten eingeteilt werden. Weiterhin existieren Dampferzeuger mit einer Mehrzahl von Druckstufen mit unterschiedlichen thermischen Zuständen des jeweils enthaltenen Wasser-Dampf-Gemisches.

Dampferzeuger können generell als Naturumlauf-, Zwangumlauf- oder Durchlaufdampferzeuger ausgelegt sein. In einem Durchlaufdampferzeuger führt die Beheizung von Verdampferrohren zu einer vollständigen Verdampfung des Strömungsmediums in den Verdampferrohren in einem Durchgang. Das Strömungsmedium - üblicherweise Wasser - wird nach seiner Verdampfung den Verdampferrohren nachgeschalteten Überhitzerrohren zugeführt und dort überhitzt. Die Position des Verdampfungsendpunkts, d. h. die Stelle des Überganges von einer Strömung mit Restnässe zu reiner Dampfströmung, ist dabei variabel und betriebsartabhängig. Beim Volllastbetrieb eines derartigen Durchlaufdampferzeugers liegt der Verdampfungsendpunkt beispielsweise in einem Endbereich der Verdampferrohre, so dass die Überhitzung des verdampften Strömungsmediums bereits in den Verdampferrohren beginnt.

Ein Durchlaufdampferzeuger unterliegt im Gegensatz zu einem Natur- oder Zwangumlaufdampferzeuger keiner Druckbegrenzung, so dass er für Frischdampfdrücke weit über dem kritischen Druck von Wasser (pₖᵣᵢₜ ≈ 221 bar) - bei dem bei keiner Temperatur Wasser und Dampf gleichzeitig vorkommen können und damit auch keine Phasentrennung möglich ist - ausgelegt werden kann.

Zur Erhöhung des Wirkungsgrades des Abhitzedampferzeugers umfasst dieser üblicherweise einen Speisewasservorwärmer oder Economizer. Dieser besteht aus mehreren Economizerheizflächen, welche im Rauchgasweg die letzten Heizflächen nach einer Anzahl von Verdampfer-, Überhitzer- und Zwischenüberhitzerheizflächen bilden. Strömungsmediumsseitig ist der Economizer den Verdampferheizflächen und Überhitzerheizflächen vorgeschaltet und nutzt die Restwärme in den Abgasen, um das Speisewasser vorzuwärmen. Durch die genannte Anordnung im Rauchgaskanal durchströmt das Rauchgas den Economizer bei relativ niedrigen Temperaturen.

Während des Betriebes eines Abhitzedampferzeugers ist am Verdampfereintritt grundsätzlich eine ausreichende Unterkühlung des Strömungsmediums zu gewährleisten (d. h. die Temperatur des Strömungsmediums sollte einen ausreichenden Abstand zur Sättigungstemperatur aufweisen). Dadurch wird zum einen sichergestellt, dass im Verteilsystem des Verdampfers nur einphasiges Strömungsmedium vorliegt und somit keine Entmischungsvorgänge von Wasser und Dampf am Eintritt einzelner Verdampferrohre auftreten können, zum anderen wäre durch das Vorhandensein eines Wasser-Dampf-Gemischs am Verdampfereintritt eine optimale Regelung der Verdampferaustrittsenthalpie nur noch schwer bzw. gar nicht zu realisieren, in dessen Folge die Verdampferaustrittstemperaturen unter Umständen nicht mehr beherrschbar wären.

Aus diesem Grund ist ein Abhitzedampferzeuger üblicherweise derart ausgelegt, dass bei Volllast eine ausreichende Unterkühlung am Verdampfereintritt vorliegt. Gerade bei transienten Lastvorgängen kann sich jedoch aufgrund physikalischer Gegebenheiten die mediumsseitige Unterkühlung am Verdampfereintritt mehr oder minder stark ändern.

Damit trotz dieser Schwankungen eine ausreichende Unterkühlung vorliegt, sind im unteren Lastbereich zusätzliche Maßnahmen erforderlich. Hierfür wird üblicherweise über eine entsprechende Anordnung ein Teilstrom des Strömungsmediums um einen oder mehrere Economizerheizflächen in einer Bypassleitung herumgeführt und dann dem Hauptstrom beispielsweise am Eintritt des letzten Economizers wieder beigemischt. Durch eine derartige teilweise Vorbeileitung des Strömungsmediums am Rauchgaskanal wird die Gesamtwärmeaufnahme des Speisewassers in den Economizerheizflächen reduziert und somit sichergestellt, dass eine ausreichende Unterkühlung des Strömungsmediums am Verdampfereintritt auch im unteren Lastbereich zu erreichen ist. Dokumente US 3 818 872 A, EP 1 059 488 offenbaren Verdampfer mit Economizer, eine dem Economizer parallel geschaltete Bypassleitung, wobei die Durchflussmenge der Bypassleitung durch eine charakteristische Kenngröße geregelt oder gesteuert wird.

In heutigen Anlagen wird der Teilstrom durch die Economizerbypassleitung im entsprechenden Lastbereich üblicherweise gerade so eingestellt, dass im stationären Betrieb eine Unterkühlung am Verdampfereintritt von beispielsweise mindestens 3 K eingehalten wird. Dafür ist eine Temperatur- und Druckmessung am Verdampfereintritt vorgesehen, mit deren Hilfe über eine Differenzbildung die tatsächliche Unterkühlung zu jedem Zeitpunkt ermittelt werden kann. Durch einen Soll-IstVergleich wird bei Unterschreiten der Mindestunterkühlung ein Ventil in der Economizerbypassleitung angesteuert. Dieses Ventil erhält einen Öffnungsimpuls von beispielsweise 1 s. Über die Ventilstellzeit ist mit diesem Öffnungsimpuls unmittelbar eine neue Ventilstellung verknüpft, in der dann das Ventil für beispielsweise 30 s verharrt. Für den Fall, dass die geforderte Mindestunterkühlung auch nach diesen 30 s noch nicht erreicht ist, wird der gleiche Vorgang wiederholt, bis entweder die Mindestunterkühlung erreicht bzw. überschritten wird oder aber das Ventil vollständig geöffnet ist.

Ist die gemessene Unterkühlung im umgekehrten Fall beispielsweise größer als 6 K, erhält das Ventil einen Schließimpuls von beispielsweise 1 s. In der neuen Ventilstellung wird im Vergleich zum Öffnen in der Regel für einen größeren Zeitraum (beispielsweise 600 s) verharrt, bevor nach erneutem Abgleich zwischen Soll- und Istwert der gleiche Vorgang wiederholt wird, sollte die Unterkühlung am Verdampfereintritt noch größer als 6 K und das Ventil noch nicht vollständig geschlossen sein. Zwischen den einzelnen Stellimpulsen werden hier vergleichsweise große Zeitabstände gewählt, um eine Dampfbildung im Economizer zu vermeiden.

Wie sich herausgestellt hat, kann jedoch gerade bei schnellen Lastabsenkungen, wie sie in heutigen GuD-Anlagen immer wieder vorkommen, unter Umständen das oben beschriebene Steuerungskonzept die geforderte Mindestunterkühlung des Fluids am Verdampfereintritt nur schwer bzw. gar nicht sicherstellen. Dadurch könnte bei diesen schnellen Laständerungen eine Dampfbildung am Verdampfereintritt nicht ausgeschlossen werden, so dass Probleme bei der Verteilung auf die einzelnen Verdampferrohre auftreten können und eine Regelung der Verdampferaustrittstemperatur unter Umständen nicht mehr möglich wäre.

Der Erfindung liegt daher die Aufgabe zugrunde, ein Verfahren zum Betreiben eines Abhitzedampferzeugers der oben genannten Art sowie einen Abhitzedampferzeuger anzugeben, welche eine höhere betriebliche Sicherheit und Zuverlässigkeit bei der Steuerung des Abhitzedampferzeugers ermöglichen.

Bezüglich des Verfahrens wird diese Aufgabe erfindungsgemäß durch ein Verfahren gemäß unabhängigen Verfahrensanspruch 1 gelöst.

Die Erfindung geht dabei von der Überlegung aus, dass eine höhere betriebliche Sicherheit und Zuverlässigkeit bei der Steuerung des Abhitzedampferzeugers möglich wäre, wenn eine Bildung eines Wasser-Dampf-Gemischs am Eintritt des Verdampfers in allen Lastzuständen zuverlässig vermieden werden könnte. Dabei ist die Gefahr einer Dampfbildung insbesondere bei schnellen Lastwechseln vergleichsweise groß, da hier eine vergleichsweise schnelle Änderung der Unterkühlung am Eintritt des Verdampfers vorliegt. In diesen Fällen reagiert die bisher vorgesehene Regelung der Unterkühlung durch Beeinflussung der Economizerbypassdurchflussmenge zu langsam. Es sollte also eine schneller reagierende Steuerung oder Regelung vorgesehen werden.

Dabei hat sich herausgestellt, dass die Reaktionszeit des bisher üblichen Steuerungskonzeptes dabei insbesondere daraus resultiert, dass als Eingangsgröße für die Steuerung die Unterkühlung, d. h. die Differenz zwischen Temperatur am Verdampfereintritt und Sättigungstemperatur im Verdampfer verwendet wird. Dies bedeutet, dass die Steuerung für die Durchflussmenge der Economizerbypassleitung erst dann eingreift, wenn bereits eine Veränderung der Unterkühlung am Verdampfereintritt erfolgt. Eine Verbesserung wäre daher möglich, wenn eine zeitlich vorgelagerte Kenngröße in der Art einer prädiktiven Steuerung oder Regelung verwendet werden könnte.

Ausgehend von der Erkenntnis, dass eine Änderung der Unterkühlung am Verdampfereintritt durch die Änderung der dem Abhitzedampferzeuger zugeführten Wärmeenergie verursacht wird, kann dies dadurch erreicht werden, indem eine für diese dem Abhitzedampferzeuger zugeführte Wärmeenergie charakteristische Kenngröße zur Steuerung oder Regelung der Durchflussmenge der Bypassleitung verwendet wird.

In vorteilhafter Ausgestaltung wird bei einer Erhöhung der Kenngröße die Durchflussmenge der Bypassleitung vermindert. Dadurch kann bereits bei einer Erhöhung der dem Abhitzedampferzeuger zugeführten Wärmeenergie und damit noch vor der Messung einer tatsächlichen Änderung der Temperatur bzw. Unterkühlung am Eintritt des Verdampfers die Durchflussmenge der Bypassleitung entsprechend angepasst werden. Erhöht sich nämlich bei heutiger Betriebsweise des Abhitzedampferzeugers die dem Abhitzedampferzeuger zugeführte Wärmemenge, so ist dies mit einer Vergrößerung weiterer thermodynamischer (Zustands-)Größen des Strömungsmediums (wie beispielsweise Speisewassermassenstrom, Druck, Mediumstemperaturen) verknüpft, was aufgrund physikalischer Gesetzmäßigkeiten unmittelbar mit einer Erhöhung der Eintrittsunterkühlung einhergeht. Daher wird in diesem Fall die Durchflussmenge der Bypassleitung verringert, so dass die Temperatur am Austritt des Economizers erhöht und so die Unterkühlung am Verdampfereintritt verringert wird.

Entsprechend umgekehrt wird bei einer Verringerung der Kenngröße vorteilhafterweise die Durchflussmenge der Bypassleitung erhöht, um so die Austrittstemperatur des Economizers zielgerichtet anzupassen.

Für eine derartige prädiktive Steuerung oder Regelung der Durchflussmenge der Bypassleitung des Economizers, die diese bereits vor einer tatsächlich gemessenen Änderung der Temperatur am Eintritt des Verdampfers anpasst, ist eine konkrete, zuverlässige Kenngröße für die dem Abhitzedampferzeuger zugeführte Wärmeenergie erforderlich. Es wird daher die Leistung einer dem Abhitzedampferzeuger rauchgasseitig vorgeschalteten Gasturbine als für die dem Abhitzedampferzeuger zugeführte Wärmeenergie charakteristische Kenngröße verwendet. In Gas- und Dampfturbinenkraftwerken wird nämlich das Rauchgas durch eine derartige, dem Abhitzedampferzeuger vorgeschaltete Gasturbine erzeugt und die Temperatur bzw. Menge dieses Rauchgases verändert sich mit der momentanen Leistung der Gasturbine. Daher ist die Leistung der vorgeschalteten Gasturbine charakteristisch für die dem Abhitzedampferzeuger zugeführte Wärmemenge und kann zudem als einfach auszulesendes Signal einer entsprechenden Regelungseinrichtung zugeführt werden. Somit ist eine besonders einfache Steuerung oder Regelung der Durchflussmenge der Economizerbypassleitung möglich.

In Abhitzedampferzeugern sind häufig nicht sämtliche Heizflächen des Economizers mit einer Bypassleitung versehen, sondern die Bypassleitung verläuft beispielsweise parallel zu einer Anzahl von Economizerheizflächen und nach der Mischstelle von Bypassleitung und Durchfluss durch diese Economizerheizflächen schließen sich eine oder mehrere weitere Economizerheizflächen an. Das bisher verwendete Temperatursignal zur Regelung der Durchflussmenge der Bypassleitung wird am Austritt der letzten Economizerheizfläche und damit am Eintritt des Verdampfers gemessen. Dementsprechend ist dieses Signal, welches die durch Änderungen der Durchflussmenge der Bypassleitung verursachte Temperaturdifferenz erfasst, verzögert mit einerseits der Zeit, die das Strömungsmedium für das Fließen durch die letzten, nicht mit einer Bypassleitung versehenen Economizerheizflächen benötigt, andererseits auch durch Einspeichervorgänge thermischer Energie in die Rohrwände dieser Heizflächen, deren Wärmekapazität ebenso zu berücksichtigen ist. Daher könnte eine weitere Verbesserung der Geschwindigkeit der Steuerung oder Regelung erfolgen, wenn vorteilhafterweise die Temperatur an der Mischstelle am Austritt der Bypassleitung zur Steuerung oder Regelung der Durchflussmenge der Bypassleitung verwendet wird. Somit ist eine noch zuverlässigere und schnellere Steuerung oder Regelung und Verhinderung einer Dampfbildung am Eintritt des Verdampfers möglich.

Die Verdampfereintrittsunterkühlung wird neben Temperaturschwankungen am Austritt des Economizers weiterhin noch maßgeblich durch Schwankungen der Sättigungstemperatur im Verdampfer beeinflusst. Da die Sättigungstemperatur im Verdampfer im Wesentlichen vom Druck im Rohrsystem beeinflusst wird, kann z. B. bei schnellen Systemdruckänderungen (beispielsweise beim Auflösen einer Drosselreserve) ein starker Rückgang der Eintrittsunterkühlung auftreten. Dabei ist diese Änderung der Eintrittsunterkühlung unabhängig von der dem Abhitzedampferzeuger zugeführten Wärmeenergie. Um auch ein derartiges Szenario zu berücksichtigen, sollte vorteilhafterweise die Sättigungstemperatur im Verdampfer zur Steuerung oder Regelung der Durchflussmenge der Bypassleitung verwendet werden. Dadurch kann die Regelgüte für die Economizerbypassleitung im Falle einer schnellen Druckänderung im Verdampfer weiter verbessert werden.

Eine noch bessere Regelgüte der Durchflussmenge der Bypassleitung kann weiterhin erreicht werden, wenn eine noch bessere, für die dem Abhitzedampferzeuger zugeführte Wärmeenergie charakteristische Kenngröße bei der Steuerung oder Regelung verwendet wird. Unter Umständen kann nämlich die Leistung einer vorgeschalteten Gasturbine keine ausreichende Qualität gewährleisten, da dieses Signal eventuell nicht ausreichend mit der in den Abhitzedampferzeuger eingebrachten Wärmemenge korreliert, andererseits steht dieses Signal in Anwendungen ohne vorgeschaltete Gasturbine nicht zur Verfügung.

Daher sollte in vorteilhafter Ausgestaltung die bilanzierte Rauchgaswärme des Verdampfers als für die dem Abhitzedampferzeuger zugeführte Wärmeenergie charakteristische Kenngröße verwendet werden. Die bilanzierte Rauchgaswärme wird im Wesentlichen aus dem Massenstrom des Rauchgases einerseits und der Temperaturdifferenz am rauchgasseitigen Eintritt und am Austritt des Verdampfers ermittelt. Dabei wird die Eintrittstemperatur gemessen und die Austrittstemperatur durch die Sättigungstemperatur des Verdampfers angenähert. Dies ermöglicht praktisch eine direkte Messung des in den Verdampfer - und damit den Abhitzedampferzeuger - eingebrachten Wärmestroms. Im Übrigen liegt dieses Signal in Regeleinrichtungen für Abhitzedampferzeuger häufig bereits vor, da es zur Speisewasserregelung verwendet werden kann. Durch die Verwendung dieses Signals kann die Güte der Steuerung oder Regelung weiter verbessert werden und eine ausreichende Unterkühlung am Eintritt des Verdampfers noch besser sichergestellt werden.

Bezüglich des Abhitzedampferzeugers wird die Aufgabe gelöst durch einen Abhitzedampferzeuger mit einem Verdampfer, mit einem Economizer mit einer Anzahl von Economizerheizflächen, mit einer zu einer Anzahl von Economizerheizflächen strömungsmediumsseitig parallel geschalteten Bypassleitung mit einem Durchflusssteuer- oder Durchflussregelventil, mit einer Temperatur- und Druckmesseinrichtung am Verdampfereintritt und gegebenenfalls einer Temperaturmesseinrichtung an der Mischstelle am Austritt der Bypassleitung und einer mit den vorgenannten Messeinrichtungen und dem Durchflusssteuer- oder Durchflussregelventil datenseitig verbundenen Steuereinrichtung, welche zur Durchführung des genannten Verfahrens ausgelegt ist.

Ein derartiger Abhitzedampferzeuger kommt in einer Gas- und Dampfturbinenanlage zum Einsatz.

Die mit der Erfindung verbundenen Vorteile bestehen insbesondere darin, dass durch die Verwendung einer für die dem Abhitzedampferzeuger zugeführten Wärmeenergie charakteristischen Kenngröße zur Steuerung oder Regelung der Durchflussmenge der Bypassleitung des Economizers eines Abhitzedampferzeugers ein vorhersagbarer und sicherer Betrieb durch die zuverlässige Einstellung der Unterkühlung am Verdampfereintritt gewährleistet werden kann. Weiterhin werden zu große Temperaturschwankungen am Verdampferaustritt vermieden, was beispielsweise im Hinblick auf die dickwandigen Bauteile des dem Verdampfer nachgeschalteten Wasserdampfabscheiders weitere Vorteile mit sich bringt. Das Verfahren ist damit insbesondere für moderne Gas- und Dampfturbinenkraftwerke geeignet, in denen schnelle Laständerungen häufig erforderlich sind.

Die Erfindung wird anhand einer Zeichnung näher erläutert. Darin zeigen:
FIG 1 eine schematische Darstellung des Regelverfahrens unter Berücksichtigung der Leistung einer dem Abhitzedampferzeuger vorgeschalteten Gasturbine, und
FIG 2 eine schematische Darstellung des Regelverfahrens unter Berücksichtigung der bilanzierten Rauchgaswärme des Verdampfers und der Änderung der Sättigungstemperatur im Verdampfer.

Gleiche Teile sind in beiden Figuren mit denselben Bezugszeichen versehen.

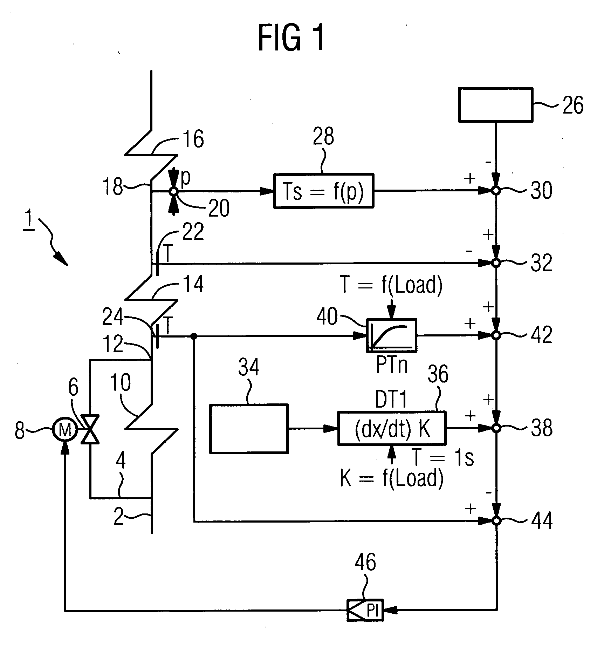

FIG 1 zeigt zunächst schematisch ausgewählte Bauteile eines Abhitzedampferzeugers 1. Strömungsmedium strömt, getrieben durch eine nicht näher dargestellte Pumpe zunächst am Eintritt 2 in den Kreislauf, wobei zunächst eine Bypassleitung 4 abzweigt. Zur Regelung des Durchflusses der Bypassleitung ist ein Durchflussregelventil 6 vorgesehen, welches durch einen Motor 8 regelbar ist. Es kann auch ein einfaches Steuerventil vorgesehen sein, jedoch ist durch ein schnell reagierendes Regelventil eine bessere Einstellung der Unterkühlung am Verdampfereintritt möglich.

Ein Teil des Strömungsmediums strömt somit abhängig von der Stellung des Durchflussregelventils 6 in die Bypassleitung 4, ein anderer Teil strömt in eine erste Economizerheizfläche 10. Es können parallel zur Bypassleitung 4 auch weitere Economizerheizflächen vorgesehen sein. Am Austritt der Economizerheizfläche 10 wird an einer Mischstelle 12 das Strömungsmedium aus der Bypassleitung 4 und der Economizerheizfläche 10 vermischt.

Der Mischstelle 12 ist eine weitere Economizerheizfläche 14 nachgeschaltet. Nachdem das Strömungsmedium die Economizerheizfläche 14 passiert hat, tritt es in den nachgeschalteten Verdampfer 16 am Verdampfereintritt 18 ein. Dem Verdampfer 16, der ebenso aus einer Anzahl von Heizflächen bestehen kann, sind weitere Bauteile wie beispielsweise eine Wasser-Dampf-Abscheideeinrichtung und weitere Überhitzerheizflächen nachgeschaltet.

Rauchgasseitig sind verschiedene Anordnungen der Economizerheizflächen 10, 14 und des Verdampfers 16 möglich. Üblicherweise sind jedoch die Economizerheizflächen 10, 14 dem Verdampfer 16 rauchgasseitig nachgeschaltet, da die Economizer das vergleichsweise kälteste Strömungsmedium führen und die Restwärme im Rauchgaskanal nutzen sollen. Um einen reibungslosen Betrieb des Abhitzedampferzeugers 1 zu gewährleisten, sollte am Verdampfereintritt 18 eine ausreichende Unterkühlung, d. h. eine ausreichende Differenz von aktueller Temperatur zur Sättigungstemperatur im Verdampfer vorliegen, so dass ausschließlich flüssiges Strömungsmedium vorliegt. Nur so kann sichergestellt werden, dass eine zuverlässige Verteilung des Strömungsmediums auf die einzelnen Verdampferrohre im Verdampfer 16 erfolgt.

Zur Regelung der Unterkühlung am Verdampfereintritt 18 sind an dieser Stelle eine Druckmesseinrichtung 20 sowie eine Temperaturmesseinrichtung 22 vorgesehen. Ein weiteres, schneller reagierendes Temperatursignal, welches nicht durch die Durchlaufzeit des Strömungsmediums durch die Economizerheizfläche 14 verzögert ist, wird von einer weiteren Temperaturmesseinrichtung 24 an der Mischstelle 12 bereitgestellt.

Regelungsseitig wird zunächst ein Unterkühlungssollwert 26 am Verdampfereintritt 18 vorgegeben. Dieser kann beispielsweise 3 K betragen, d. h., die Temperatur am Verdampfereintritt 18 soll 3 K unterhalb der Sättigungstemperatur im Verdampfer 16 liegen.

Aus dem an der Druckmesseinrichtung 20 ermittelten Druck wird dazu zunächst die Sättigungstemperatur 28 im Verdampfer 16 ermittelt, da diese eine direkte Funktion des im Verdampfer 16 herrschenden Drucks ist. Diese Sättigungstemperatur 28 wird dann in einem Addierglied 30 zum negativen Unterkühlungssollwert 26 addiert. In einem weiteren Addierglied 32 wird darauf die an der Temperaturmesseinrichtung 22 gemessene Temperatur am Verdampfereintritt 18 abgezogen. Dadurch ergibt sich nun ein geeigneter Regelwert für eine Steuerung des Durchflussregelventils 6.

Bei schnellen Änderungen der dem Abhitzedampferzeuger 1 zugeführten Wärmemenge kann unter Umständen die Regelung der Durchflussmenge der Bypassleitung 4 zu langsam erfolgen, so dass eine ausreichende Unterkühlung am Verdampfereintritt 18 nicht mehr gewährleistet ist. Um eine prädiktive Regelung zu ermöglichen, wird daher die Leistung 34 der dem Abhitzedampferzeuger 1 vorgeschalteten Gasturbine als Eingangssignal verwendet. Die Leistung 34 dient als Eingangssignal für ein DT1-Glied 36, welches bei Änderungen der Leistung 34 ein entsprechend skaliertes Ausgangssignal erzeugt. Dieses Ausgangssignal wird in einem weiteren Addierglied 38 zur gemessenen Abweichung der Unterkühlung am Verdampfereintritt zum Sollwert addiert. Dadurch kann bereits zu Beginn einer Lastrampe der Gasturbine entsprechend reagiert werden und ein Stellimpuls für das Durchflussregelventil 6 erzeugt werden (es muss nicht erst eine gemessene Unter- oder Überschreitung der Mindestunterkühlung abgewartet werden). Je nach Konfiguration der beteiligten Komponenten kann so auch bei schnellen Laständerungen mit Hilfe dieses zusätzlichen Vorsteuersignals eine ausreichende Mindestunterkühlung am Verdampfereintritt 18 sichergestellt werden.

Obwohl mit dieser zusätzlichen Maßnahme in den meisten Fällen vermutlich die gewünschte Mindestunterkühlung am Verdampfereintritt 18 gewährleistet werden kann, muss aufgrund des trägen Zeitverhaltens der Steuerung mit entsprechenden Schwankungen der Verdampfereintrittsunterkühlung gerechnet werden, was sich nachteilig auf die Speisewasserdurchflussregelung auswirkt und daher in mehr oder minder starken Temperaturschwankungen am Verdampferaustritt mündet.

Abhilfe schafft hier die zusätzliche Temperaturmesseinrichtung 24 nach der Mischstelle 12. Ändert sich aufgrund eines Regeleingriffs der Teilstrom durch die Bypassleitung 4, werden die damit auftretenden Temperaturänderungen des Strömungsmediums bereits an der Mischstelle 12, d. h. vor dem Eintritt in die weitere Economizerheizfläche 14 erfasst, was im Fall von nur einer Temperaturmesseinrichtung 22 am Verdampfereintritt 18 bzw. Austritt der Economizerheizfläche 14 in Folge der Durchlaufzeit durch die Economizerheizfläche 14 nur entsprechend zeitverzögert erfolgen könnte. Diese Messinformation wird auf den negativen Regelwert in einem Addierglied 44 addiert.

Es bleibt allerdings zu beachten, dass das zeitliche Verzögerungsverhalten der Economizerheizfläche 14 berücksichtigt werden muss, damit auf bereits durchgeführte Regeloperationen (ausgelöst durch die Änderung der Strömungsregelungstemperatur am Eintritt der Economizerheizfläche 14) nicht ein weiterer Regeleingriff erfolgt (nachdem die Temperaturänderung am Austritt der Economizerheizfläche 14 angekommen ist). Dazu wird das Temperatursignal der Temperaturmesseinrichtung 24 nach der Addition in einem PTn-Glied 40 verarbeitet, welches das zeitliche Verzögerungsverhalten der Economizerheizfläche 14 simuliert. Das erhaltene Ausgangssignal wird in einem weiteren Addierglied 42 auf den bisherigen Regelwert addiert und gleicht eine Doppeltberücksichtigung somit wieder aus.

Der so ermittelte Regelwert wird an einen Regler 46 weitergeleitet, welcher den Motor 8 des Durchflussregelventils 6 der Bypassleitung 4 ansteuert.

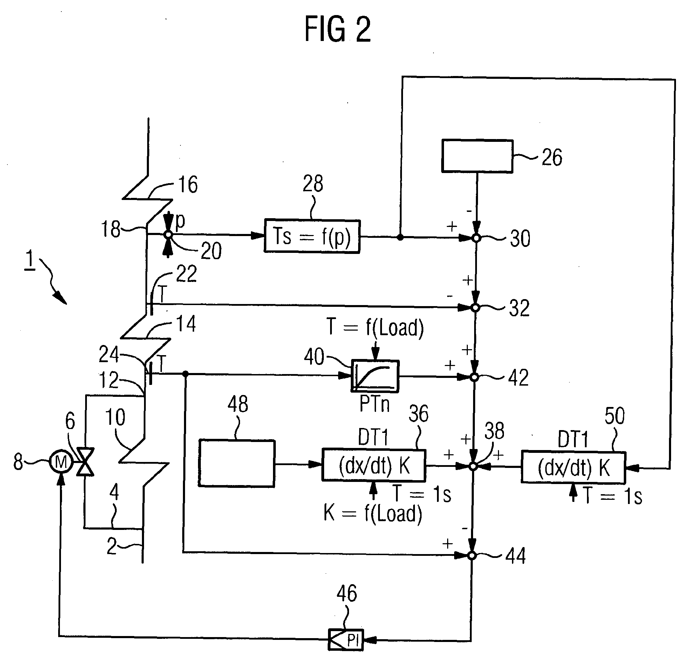

FIG 2 zeigt eine schematische Darstellung einer Variante des Regelkreises aus Abbildung 1. Im Unterschied zur FIG 1 wird hier anstatt der Leistung 34 der Gasturbine die bilanzierte Rauchgaswärme 48 als Eingangssignal für das DT1-Glied 36 verwendet. Die bilanzierte Rauchgaswärme 48 wird ermittelt aus der Differenz der Rauchgastemperatur am Verdampfereintritt 18 und der Rauchgastemperatur am Verdampferaustritt (siehe Beschreibung weiter vorn) sowie der durch den Rauchgasmassenstrom. Somit ist die bilanzierte Rauchgaswärme 48 ein direkterer Indikator für die dem Abhitzedampferzeuger 1 zugeführte Wärmemenge als die Leistung 34 der vorgeschalteten Gasturbine. Somit ist eine noch bessere Regelung der Temperatur am Verdampfereintritt 18 möglich.

Weiterhin zeigt FIG 2 ein weiteres DT1-Glied 50, welches ein Ausgangssignal bei Änderungen der Sättigungstemperatur im Verdampfer 16 erzeugt. Dieses Ausgangssignal wird im Addierglied 38 dem Regelkreis zugeführt. Dadurch kann auch bei einer stationären Wärmezufuhr in den Abhitzedampferzeuger 1 bei einer schnellen Änderung des Drucks und damit der Sättigungstemperatur 28 im Verdampfer 16 eine ausreichende Unterkühlung am Verdampfereintritt 18 sichergestellt werden.

Insgesamt ist durch das dargestellte Regelkonzept ein wesentlich sicherer und zuverlässigerer Betrieb des Abhitzedampferzeugers 1 möglich.

## Patentansprüche

1. Verfahren zum Betreiben eines Abhitzedampferzeugers (1) mit einem Verdampfer (16), einem Economizer mit einer Anzahl von Economizerheizflächen (10, 14) und mit einer zu einer Anzahl von Economizerheizflächen (10) strömungsmediumsseitig parallel geschalteten Bypassleitung (4), bei dem eine für die dem Abhitzedampferzeuger (1) zugeführte Wärmeenergie charakteristische Kenngröße zur Steuerung oder Regelung der Durchflussmenge der Bypassleitung (4) verwendet wird **dadurch gekennzeichnet dass** die Leistung (34) einer dem Abhitzedampferzeuger (1) rauchgasseitig vorgeschalteten Gasturbine als für die dem Abhitzedampferzeuger (1) zugeführte Wärmeenergie charakteristische Kenngröße verwendet wird.

2. Verfahren nach Anspruch 1, bei dem bei einer Erhöhung der Kenngröße die Durchflussmenge der Bypassleitung (4) vermindert wird.

3. Verfahren nach Anspruch 1 oder 2, bei dem bei einer Verringerung der Kenngröße die Durchflussmenge der Bypassleitung (4) erhöht wird.

4. Verfahren nach einem der Ansprüche 1 bis 3, bei dem die Temperatur an der Mischstelle (12) am Austritt der Bypassleitung (4) zur Steuerung oder Regelung der Durchflussmenge der Bypassleitung (4) verwendet wird.

5. Verfahren nach einem der Ansprüche 1 bis 4, bei dem die Sättigungstemperatur (28) im Verdampfer (16) zur Steuerung oder Regelung der Durchflussmenge der Bypassleitung (4) verwendet wird.

6. Verfahren nach einem der Ansprüche 1 bis 5, bei dem die bilanzierte Rauchgaswärme (48) des Verdampfers (16) als für die dem Abhitzedampferzeuger (1) zugeführte Wärmeenergie charakteristische Kenngröße verwendet wird.

7. Abhitzedampferzeuger (1) mit einem Verdampfer (16), einem Economizer mit einer Anzahl von Economizerheizflächen (10, 14), mit einer zu einer Anzahl von Economizerheizflächen (10) strömungsmediumsseitig parallel geschalteten Bypassleitung (4) mit einem Durchflusssteuer- oder Durchflussregelventil (6), mit einer Temperatur- und Druckmesseinrichtung (24) am Verdampfereintritt (18) und gegebenenfalls einer Temperaturmesseinrichtung (24) an der Mischstelle (12) am Austritt der Bypassleitung (4) und einer mit den vorgenannten Messeinrichtungen (24) und dem Durchflusssteuer- oder Durchflussregelventil (6) datenseitig verbundenen Steuereinrichtung, welche zur Durchführung des Verfahrens nach einem der Ansprüche 1 bis 6 ausgelegt ist.

8. Gas- und Dampfturbinenanlage mit einem Abhitzedampferzeuger (1) nach Anspruch 7.

## Claims

1. Method for operating a waste heat steam generator (1) having an evaporator (16), having an economizer with a number of economizer heating surfaces (10, 14), and having a bypass line (4) connected in parallel with a number of economizer heating surfaces (10) on the flow medium side, wherein a variable that is characteristic of the thermal energy supplied to the waste heat steam generator (1) is used for controlling or regulating the flow rate through the bypass line (4), **characterised in that** the power output (34) of a gas turbine connected upstream of the waste heat steam generator (1) on the flue gas side is used as a characteristic variable for the thermal energy supplied to the waste heat steam generator (1).

2. Method according to claim 1, wherein if the
characteristic variable is increased the flow rate through the bypass line (4) is reduced.

3. Method according to claim 1 or 2, wherein if the characteristic variable is reduced the flow rate through the bypass line (4) is increased.

4. Method according to one of claims 1 to 3, wherein the temperature at the mixing point (12) at the outlet of the bypass line (4) is used for controlling or regulating the flow rate through the bypass line (4).

5. Method according to one of claims 1 to 4, wherein the saturation temperature (28) in the evaporator (16) is used for controlling or regulating the flow rate through the bypass line (4).

6. Method according to one of claims 1 to 5, wherein the balanced flue gas heat (48) of the evaporator (16) is used as the characteristic variable for the thermal energy supplied to the waste heat steam generator (1).

7. Waste heat steam generator (1) having an evaporator (16), having an economizer with a number of economizer heating surfaces (10, 14), having a bypass line (4) connected in parallel with a number of economizer heating surfaces (10) on the flow medium side and having a flow control or flow regulator valve (6), having a temperature and pressure measuring device (24) at the evaporator inlet (18), and if necessary a temperature measuring device (24) at the mixing point (12) at the outlet of the bypass line (4) and a control device that is connected to the aforesaid measuring devices (24) and the flow control or flow regulator valve (6) on the data side and is embodied for performing the method according to one of claims 1 to 6.

8. Gas and steam turbine system having a waste heat steam generator (1) according to claim 7.

## Revendications

1. Procédé pour faire fonctionner un générateur de vapeur (1) à récupération de la chaleur perdue, comprenant un évaporateur (16), un économiseur et un certain nombre de surfaces (10, 14) de chauffe d'économiseur et comprenant un conduit (4) de dérivation monté du côté du fluide en écoulement en parallèle avec un certain nombre de surfaces (10) de chauffe de l'économiseur, dans lequel on utilise, pour commander ou réguler le débit du conduit (4) de dérivation, une grandeur caractéristique de l'énergie calorifique apportée au générateur de vapeur (1) à récupération de la chaleur perdue, **caractérisé en ce qu'**on utilise, pour la grandeur caractéristique de l'énergie calorifique apportée au générateur de vapeur (1) à récupération de la chaleur perdue, la puissance (34) d'une turbine à gaz montée en amont du côté des gaz de fumée du générateur de vapeur (1) à récupération de la chaleur perdue.

2. Procédé suivant la revendication 1, dans lequel, si la grandeur caractéristique augmente, on diminue le débit dans le conduit (4) de dérivation.

3. Procédé suivant la revendication 1 ou 2, dans lequel, si la grandeur caractéristique diminue, on augmente le débit dans le conduit de dérivation.

4. Procédé suivant l'une des revendications 1 à 3, dans lequel on utilise la température au point (12) de mélange à la sortie du conduit (4) de dérivation pour commander ou réguler le débit dans le conduit (4) de dérivation.

5. Procédé suivant l'une des revendications 1 à 4, dans lequel on utilise la température (28) de saturation dans l'évaporateur (16) pour commander ou réguler le débit dans le conduit (4) de dérivation.

6. Procédé suivant l'une des revendications 1 à 5, dans lequel on utilise la chaleur (48) des gaz de fumée bilanciée de l'évaporateur (16) comme grandeur caractéristique de l'énergie calorifique apportée au générateur de vapeur (1) à récupération de la chaleur perdue.

7. Générateur de vapeur (1) à récupération de la chaleur perdue, comprenant un évaporateur (16), un économiseur ayant un certain nombre de surfaces (10, 14) de chauffe d'économiseur, comprenant un conduit (4) de dérivation monté en parallèle du côté du fluide en écoulement d'un certain nombre de surfaces (10) de chauffe d'économiseur, comprenant un robinet (6) de commande ou de réglage de débit, comprenant un dispositif (24) de mesure de la température et de mesure de la pression à l'entrée (18) de l'évaporateur et, le cas échéant, un dispositif (24) de mesure de la température au point (12) de mélange à la sortie du conduit (4) de dérivation et un dispositif de commande relié, du côté des données, au dispositif (24) de mesure mentionné ci-dessus et au robinet (6) de commande ou de réglage du débit, qui est conçu pour effectuer le procédé suivant l'une des revendications 1 à 6.

8. Installation à turbine à gaz et à turbine à vapeur ayant un générateur de vapeur (1) à récupération de la chaleur perdue suivant la revendication 7.
